# EUROPEAN PATENT SPECIFICATION

(11) **EP 3 708 429 B1**
(45) Date of publication and mention of the grant of the patent: **24.11.2021**
(21) Application number: 19162835.3
(22) Date of filing: 14.03.2019
(51) Int. Cl.: B60R 7/04, B60N 2/005

(54) **VEHICLE COMPRISING A VEHICLE SEAT, A SEAT DRAWER, A SEAT FRAME AND A MOVEMENT UNIT**
FAHRZEUG MIT FAHRZEUGSITZ, SITZSCHUBLADE, SITZRAHMEN UND BEWEGUNGSEINHEIT
VÉHICULE COMPRENANT UN SIÈGE DE VÉHICULE, UN TIROIR DE SIÈGE, UN CADRE DE SIÈGE ET UNE UNITÉ DE MOUVEMENT

(43) Date of publication of application: 16.09.2020
(73) Proprietor: AUDI AG, 85045 Ingolstadt (DE); LG Electronics Inc., Yoido-dong Seoul 150-721 (KR)
(72) Inventor: HÉLOT, Jacques, 85051 Ingolstadt (DE); MÜLLER, Ulrich, 85055 Ingolstadt (DE); KIM, Seonghwan, Gangseo-gu, Seoul (KR); KANG, Seungmo, Seocho-gu Seoul (KR); PARK, Sungjun, Seocho-gu Seoul (KR)
(74) Representative: Hofstetter, Schurack & Partner

(56) References cited:
- FR-A1- 2 908 363
- US-A- 6 161 896

## Description

The invention is concerned with a vehicle comprising a vehicle seat, a seat drawer, a seat frame and a movement unit.

Usually, a person travelling by a vehicle carries his commodities in a luggage-case inside the vehicle and may place it in the foot rest place in front of the vehicle seat or in an inter seat space, which is a space between a rear vehicle seat and a front vehicle seat. This can however hinder the person to place his feet or legs properly or comfortably, since the foot rest space or the inter space has been occupied by the luggage-case. In the case of the foot rest space corresponding to a driver seat, the person would need to be able access a free foot rest space. Furthermore, it is necessary to avoid messiness, when commodities are placed on neighboring vehicle seats and moreover, it is necessary that the commodities are secured, especially in case of hard braking.

Document DE 20 2010 011 822 U1 discloses a drawer, which is arranged between a seat part of a vehicle seat and a vehicle floor, wherein the drawer can be pushed in and out in a vehicle longitudinal direction and comprises a locking device. However, such a drawer can only be accessed in one longitudinal direction, which is cumbersome when a person tries to access this drawer from outside the vehicle while leaning into the vehicle through an open door.

Document DE 10 2014 005 601 A1 discloses a stowage device for an interior space of a motor vehicle, in particular for a seat system, having at least one receiving element which is held on a bearing element so as to be adjustable between a closed position and an open position.

Document DE 10 2012 020 643 A1 discloses a drawer arrangement comprising guide flanges that are arranged on the side walls of a drawer and is linearly displaced on the guide rails of a drawer carrier. The drawer can be moved to an open position in a direction along the direction of travel, wherein the drawer can be arranged beneath a vehicle seat. However, such a drawer arrangement can only be accessed in the direction of travel.

Document FR 2 908 363 A1 discloses a motor vehicle seat comprising a backrest, a seat, a storage space, and a container located under the seat base. The motor vehicle seat also comprises a guide system for the container in the storage space, said guide system being arranged so that the container can exit at least partially from the front of the seat. The container can also exit at least partially from the side of the seat.

It is an object of the present invention to provide a vehicle with an opportunity for transporting a luggage without limiting a space for legs, while maintaining security and providing a fixed position for the luggage.

The object is accomplished by the subject matter of the independent claim.

Advantageous developments with convenient and non-trivial further embodiments of the invention are specified in the following description, the dependent claims and the figures.

The invention provides a vehicle comprising a vehicle seat, wherein the vehicle seat can be connected or integrated to a vehicle floor by means of a seat frame. The seat frame is arranged beneath the vehicle seat and comprises a lower part or base unit, such that a lower side of the vehicle seat and the base unit enclose a volume or space in between which is referred to as a drawer-space in the sequel. Furthermore, the base unit may be a portion of the vehicle floor. The seat frame is designed to receive a seat drawer which can be designed to be used to load or pack various commodities which may be necessary for travel or required by a user. In other words, the vehicle comprises the drawer-space between the lower side of the vehicle seat and the base unit, wherein the drawer-space is designed to receive the seat drawer. This is of advantage, because this enables the seat drawer to be placed in the drawer-space beneath the vehicle seat. This ensures that a foot resting space in front of the vehicle seat is free enabling the user to place his feet in the foot resting space. Furthermore, a free foot resting space is necessary for the user, who can be the driver of the vehicle, to be able to use brake pedals, accelerator and clutch pedals, in order to control or manoeuver the vehicle while driving manually. Furthermore, by placing the seat drawer in the drawer-space, an inter seat space can be held free, so that other passengers of the vehicle can place their feet in the inter seat space and be seated in a comfortable manner.

The vehicle comprises a mobilization or a movement unit which is located between a lower side of the seat drawer and an upper side of the base unit, wherein the movement unit is designed to enable a movement of the seat drawer along a predefined primary direction between a closed position and a primary open position. In other words, the seat drawer can be placed on the movement unit, which in turn can enable the movement of the seat drawer in and out of the drawer-space in the predefined primary direction. For example, the seat drawer can be pushed in the drawer-space by pushing the drawer in the predefined primary direction, such as in a vehicle's longitudinal direction or in a direction of forward driving. Similarly, the seat drawer can be pulled out of the drawer-space, wherein the movement unit assists the movement of the seat drawer. This is of advantage, because this enables a comfortable movement of the seat-drawer in or out of the drawer-space when required.

According to the invention, the movement unit is additionally designed to enable a movement of the seat drawer along a predefined secondary direction between the closed position and a secondary open position, wherein the predefined secondary direction is orthogonal to the predefined primary direction. In other words, the movement unit can enable the seat drawer to be moved along the predefined secondary direction, such as transverse direction normal or orthogonal to the longitudinal direction or the direction of forward driving. This is of advantage, because this can enable to load or unload commodities into or out of the seat drawer in comfortable and a user friendly manner, since in the case of the secondary open position in the transverse direction, the commodities can be loaded or unloaded by the user while standing outside or by being seated on the vehicle seat of the vehicle, wherein the seat drawer can protrude out of the vehicle, for example through the opened vehicle door. Furthermore, in the ability of the movement unit to enable the seat drawer to be opened in two directions, this can provide an additional degree of freedom for the usage of the seat drawer to load or unload commodities into or out of the seat drawer. This in turn enables an efficient usage of space in the vehicle for transporting commodities. It is thinkable that the predefined primary direction may be the longitudinal direction in the direction of the driving and the predefined secondary direction may be the transverse direction normal to the direction of the driving or vice-versa. This is of advantage, especially in the case of self-driving vehicles, where the positions of the vehicle seat can varied, since the user can concentrate on other activities other than concentrating on driving such as recreation, for example.

Hence, there is a greater need not only to carry different kinds and amount of additional commodities, such as to eat and/or drink and/or recreation, but also a need that the aforementioned additional commodities can be loaded in vehicle, for example in the seat drawer and at the same time can be accessible to the user when required, even when the position of the vehicle seat is changed. Furthermore, because of a certain amount of space is needed under the vehicle seat, the inventive seat drawer may be implemented in higher vehicles, such as SUV (Sport utility vehicles), vans and buses.

Note that in the following the term "primary" is used for elements that are related to moving the seat drawer along the primary direction and the term "secondary" is used for elements that are related to moving the seat drawer along the secondary direction.

The invention also comprises embodiments that provide features which afford additional technical advantages.

In one embodiment, the upper side of the base unit may comprise at least one primary sliding element aligned along the predefined primary direction. A bottom side of the movement unit may comprise at least one corresponding primary sliding element aligned along the predefined primary direction. Furthermore, the at least one primary sliding element may be implemented as a primary rail element and the at least one corresponding primary sliding element may be implemented as a primary groove element or vice-versa. In other words, in one case, the at least one primary sliding element may be implemented as the primary rail element and the at least one corresponding primary sliding element may be implemented as the primary groove element. However, in another case, the at least one primary sliding element may be implemented as the primary groove element and the at least one corresponding primary sliding element may be implemented as the primary rail element. Furthermore, the primary rail element may be slidable in the primary groove element. This is of advantage, because this can enable the seat drawer to be moved from the closed position in the drawer-space to the primary open position out of the drawer-space along the predefined primary direction, such as in the direction of the travel. Furthermore, the primary rail element and the primary groove element allow the seat drawer and the movement unit to be movably coupled with each other, thus, providing a stable moving mechanism along the predefined primary direction.

In one embodiment, the lower side of the seat drawer may comprise at least one secondary sliding element aligned along the predefined secondary direction. A top side of the movement unit may comprise at least one corresponding sliding secondary element aligned along the predefined secondary direction. Furthermore, the at least one secondary sliding element may be implemented as a secondary rail element and the at least one corresponding secondary sliding element may be implemented as a secondary groove element or vice-versa. In other words, in one case, the at least one secondary element may be implemented as the secondary rail element and the at least one corresponding secondary sliding element may be implemented as the secondary groove element. However, in another case, the at least one secondary sliding element may be implemented as the secondary groove element and the at least one corresponding secondary sliding element may be implemented as the secondary rail element. Furthermore, the secondary rail element may be slidable in the secondary groove element. This is of advantage, because this can enable the seat drawer to be moved from the closed position in the drawer-space to the secondary open position out of the drawer-space along the predefined secondary direction, such as in the direction transverse or normal to that of the travel. Furthermore, the secondary rail element and the secondary groove element allow the movement unit and the base unit to be movably coupled with each other, thus, providing a stable moving mechanism along the predefined secondary direction.

In one embodiment, the movement unit may designed to move along with the seat drawer during the movement of the seat drawer between the closed position and the primary open position. In other words, the lower side of the seat drawer and the top side of the movement unit may be coupled by means of the respective secondary element and the respective corresponding secondary element. This is in turn may enable the movement unit to be coupled to the seat drawer and move along with the seat drawer between the closed position and the primary open position, when the seat drawer is pulled in or out along the predefined primary direction. This is of advantage, because this enables of the movement unit to be movable in the predefined primary direction in a stable manner. Furthermore, the movement unit may be provided with a board or a tile, which may be moved together with the seat drawer in one of the two possible directions and which may stay fixed to the base unit when moving the seat drawer in the other direction.

In one embodiment, the movement unit may comprise at least one rolling element. The at least rolling element can be made of metal or ceramic or polymer which is known to a person with ordinary skill in the related field of art. The lower side of the seat drawer may comprise at least one first framing element and the upper side of the base unit may comprise at least one second framing element. Furthermore, the at least one first framing element may be implemented as a socket element and the at least one second framing element may be implemented as a primary groove element aligned along the predefined primary direction or vice-versa. In other words, in one case, the at least one first framing element may be implemented as the socket element and the at least one second framing element may be implemented as the primary groove element aligned along the predefined primary direction. In another case, the at least one first framing element may be implemented as the primary groove element aligned along the predefined primary direction and the at least one second framing element may be implemented as the socket element. Furthermore, the socket element may be designed to receive the at least one rolling element, such that the at least one rolling element may be rotatable along a plurality of directions while being arranged within the respective socket element. In other words, the at least one socket element may be in conformity with the respective at least one rolling element, such that the at least one rolling element may be movably fixed inside the respective at least one socket element, wherein the at least one rolling element is rotatable in different direction, such as in the predefined primary direction or the predefined secondary direction. This may be realized, for example, by means of a mechanical means or a magnetic means which may be known to a person with ordinary skill in the related field of art. Furthermore, the at least one rolling element may be rollable in the respective primary groove element. This is of advantage, because this enables a stable and economical alternative for the realization of moving the seat drawer along the predefined primary direction from the closed position to the primary open position.

In one case, the at least one first framing element may be implemented as the socket element and the at least one second framing element may be implemented as the primary groove element aligned along the predefined primary direction. In this case, the movement unit comprising the at least one rolling element may move along with the seat drawer by means of the rotation within the respective socket element as well as by rolling in the respective primary groove element when the seat drawer is pulled in or out of the drawer-space along the predefined primary direction.

However, in another case, the at least one first framing element may be implemented as the primary groove element aligned along the predefined primary direction and the at least one second framing element may be implemented as the socket element. In this case, the movement unit comprising the at least one rolling element may remain static and enable the movement of the seat drawer by means of the rotation within the respective socket element on the upper side of the base unit. In this case, the lower side of the seat drawer comprising the primary groove element may move over the rotating at least one rolling element when the seat drawer is pulled in or out of the drawer-space along the predefined primary direction. This is of advantage, because this enables a stable mechanism for the movement of the seat drawer between the closed and the primary open position.

In one embodiment, the lower side of the seat drawer may comprise at least one first framing element and the upper side of the base unit may comprise at least one third framing element, whereas the movement unit may comprise at least one rolling element. Here, the description is concerned with the movement of the seat drawer in the secondary direction analogous to the aforementioned movement of the seat drawer in the primary direction. Hence, a repetition is provided for the sake of completeness. The at least one first framing element may be implemented as the socket element and the at least one third framing element may be implemented as a secondary groove element aligned along the predefined secondary direction or vice-versa. In other words, in one case, the at least one first framing element may be implemented as the socket element and the at least one third framing element may be implemented as the secondary groove element aligned along the predefined secondary direction. In another case, the at least one first framing element may be implemented as the secondary groove element aligned along the predefined secondary direction and the at least one third framing element may be implemented as the socket element. Furthermore, the socket element may be designed in the above-described manner.

Similar to the above-described manner, in one case, the at least one first framing element may be implemented as the socket element and the at least one third framing element may be implemented as the secondary groove element aligned along the predefined secondary direction, whereas, in another case, the at least one first framing element may be implemented as the secondary groove element aligned along the predefined secondary direction and the at least one third framing element may be implemented as the socket element.

In one embodiment, a side unit of the seat frame may surround at least a part of the seat drawer and/or the movement unit. In other words, the side unit of the seat frame may comprise of wall structures which may surround at least the part the seat drawer and/ or the movement unit. This is of advantage, because the side unit may enable a limitation in the movement of the seat drawer and/or the movement unit at least along one direction of the respective predefined primary direction and/or the predefined secondary direction. For example, when the seat drawer is pulled in to the drawer-space along the predefined primary direction, then the side unit may enable to blog the movement of the seat drawer, when the seat drawer is pushed in further than a predefined distance in the drawer-space. Hence, this ensures a stable as well as a safe movement of the seat drawer, since by blocking the movement of the seat drawer beyond the predefined distance, it is ensured that the seat drawer does not enter into a foot resting space of a neighboring seat. Furthermore, the side unit may provide an additional mechanical stability and strength to the seat frame.

Furthermore, it may be necessary that the seat drawer may be in a fixed state in the closed position, so that the seat drawer may not move or fly out of the drawer-space during a jerk event which can occur in the case of the driving of the vehicle, for example, when a sudden braking of the vehicle takes place or a sudden acceleration of the vehicle occurs. Hence, according to one embodiment, the lower side of the seat drawer may comprise at least one primary engaging element, wherein the seat drawer may comprise at least one primary drawer-handle which may be designed to adjust the at least one primary engaging element between a primary locking state and a primary de-locking state, wherein in the primary locking state, the at least one primary engaging element may engage the seat drawer in a fixed state with respect to the predefined primary direction and in the primary de-locking state, the at least one primary engaging element may disengage the seat drawer, in order that the seat drawer is movable along the predefined primary direction. The at least one primary engaging element may be in form of a fin or a mechanical protruding structure which may be known to a person with ordinary skill in the related field of art. In other words, the drawer-handle of the seat drawer may enable the adjustment of the at least one primary engaging element between the primary locking state and the primary de-locking state, for example, by means of a mechanical means which may be known to a person with ordinary skill in the related field of art. Furthermore, the primary drawer-handle may be designed to assist the pulling out of the seat drawer out of the drawer-space along the predefined primary direction after an adjustment of the at least one primary engaging element to the primary de-locking state. In other words, the drawer-handle may be placed on the side of the seat drawer which may be facing the predefined primary direction, for example, in direction of driving. This can enable a user, who is sitting on the corresponding vehicle seat, to easily reach the drawer-handle in order to disengage or engage the at least one primary engaging element, such that the drawer-handle can be pulled out or pushed in as per the requirement of the user.

In one embodiment, the at least one primary engaging element may be slidable in a respective at least one primary engaging groove element on the upper side of the base unit. The at least one primary engaging element may be in form of a fin or a mechanical protrusion, such that the at least one primary engaging groove element on the upper side of the base unit may be in conformity with the respective at least one primary engaging element. In other words, when the seat drawer is moved along the predefined secondary direction, the at least one primary engaging element may remain in the primary locking state which may engage the seat drawer in the fixed state with respect to the predefined primary direction but may enable the seat drawer to be moved along the predefined secondary direction, since the at least one primary engaging element may be slidable in the respective primary engaging groove element. This is of advantage, because this can enable a simpler and cost-effective means to ensure an efficient locking of the seat drawer with respect to the predefined primary direction but still ensure a smooth movement of the seat drawer along the predefined secondary direction. Furthermore, it is thinkable that the at least one primary engaging element may be implemented as a rolling element, such that the rolling element may be rollable in the at least one primary engaging groove element.

In one embodiment, the lower side of the seat drawer may comprise at least one secondary engaging element, wherein the seat drawer may comprise at least one secondary drawer-handle which may be designed to adjust the at least one secondary engaging element between a secondary locking state and a secondary de-locking state, wherein in the secondary locking state, the at least one secondary engaging element may engage the seat drawer in a fixed state with respect to the predefined secondary direction and in the secondary de-locking state, the at least one secondary engaging element may disengage the seat drawer, in order that the seat drawer is movable along the predefined secondary direction. The at least one secondary engaging element may be in form of a fin or a mechanical protruding structure which may be known to a person with ordinary skill in the related field of art. In other words, the drawer-handle of the seat drawer may enable the adjustment of the at least one secondary engaging element between the secondary locking state and the secondary de-locking state, for example, by means of a mechanical means which may be known to a person with ordinary skill in the related field of art. Furthermore, the secondary drawer-handle may be designed to assist the pulling out of the seat drawer out of the drawer-space along the predefined secondary direction after an adjustment of the at least one secondary engaging element to the primary de-locking state. In other words, the drawer-handle may be placed on the side of the seat drawer which may be facing the predefined secondary direction. This can enable the user, who is sitting on the corresponding vehicle seat, to easily reach the drawer-handle in order to disengage or engage the at least one secondary engaging element, such that the drawer-handle can be pulled out or pushed in as per the requirement of the user.

Of course, the same arrangement may be provided for the secondary direction.

In one embodiment, the at least one secondary engaging element may be slidable in a respective at least one secondary engaging groove element on the upper side of the base unit. The at least one secondary engaging element may be in form of a fin or a mechanical protrusion, such that the at least one secondary engaging groove element on the upper side of the base unit may be in conformity with the respective at least one secondary engaging element. In other words, when the seat drawer may be moved along the predefined primary direction, the at least one secondary engaging element may remain in the secondary locking state which may engage the seat drawer in the fixed state with respect to the predefined secondary direction but may enable the seat drawer to be moved along the predefined primary direction, since the at least one secondary engaging element may be slidable in the respective secondary engaging groove element. This is of advantage, because this can enable a simpler and cost-effective means to ensure an efficient locking of the seat drawer with respect to the predefined secondary direction but still ensure a smooth movement of the seat drawer along the predefined primary direction. Furthermore, it is thinkable that the at least one secondary engaging element may be implemented as a rolling element, such that the rolling element may be rollable in the at least one secondary engaging groove element.

In one embodiment, the seat drawer may be customized according to the shape and size of the drawer-space which may be enclosed by the seat frame and the lower side of the vehicle seat. This is of advantage, because this can enable an efficient positioning and locking of the seat drawer and at the same time an efficient usage of the drawer-space can be ensured, since the seat drawer is customized in order to occupy a maximum possible portion of the drawer-space.

In one embodiment, the vehicle may comprise an electronic locking unit, wherein the electronic locking unit may be designed to lock or unlock the seat drawer as a function of a user recognition signal. In other words, the vehicle may comprise a sensor unit which is designed to recognize a predefined user based on, for example, face recognition or a user signal by means of a blue-tooth technology of his/her mobile phone. Upon the identification of the predefined user, the recognition signal may send the user recognition signal to the electronic locking unit, which in turn may enable a locking or unlocking of the seat drawer as the function of the user recognition signal. This is of advantage, because it can enable the usage of the seat drawer for specific permissible users, whereas others can be forbidden from using the seat drawer, which can be beneficial in the cases such as car-sharing where a single vehicle may be used by multiple users. Furthermore, it is thinkable that a usage of the seat drawer in terms of a movability of the seat drawer either in the predefined primary direction and/or the predefined secondary direction can be adjusted by the electronic locking unit as the function of the user recognition signal.

The inventive vehicle is preferably designed as a motor vehicle, in particular as a passenger vehicle or a truck, or as a bus or a motorcycle.

The invention also comprises the combinations of the features of the different embodiments.

In the following an exemplary implementation of the invention is described. The figures show:
- Fig. 1: a schematic illustration of an embodiment of a vehicle with a vehicle seat, a seat drawer, a seat frame and a movement unit, wherein the seat drawer is in a primary open position;
- Fig. 2: a schematic illustration of an embodiment of the vehicle seat with the seat drawer in a secondary open position;
- Fig. 3: an explosion illustration of an embodiment of the vehicle seat, the seat drawer, the seat frame and the movement unit;
- Fig. 4: a bottom view of an embodiment of the seat drawer in a closed position;
- Fig. 5: a bottom view of an embodiment of the seat drawer in the primary open position;
- Fig. 6: a bottom view of an embodiment of the seat drawer in the secondary open position;
- Fig. 7: a schematic illustration of an embodiment of the seat drawer in the closed position;
- Fig. 8: an explosion illustration of an embodiment of the seat drawer, the seat frame and the movement unit;
- Fig. 9: a sectional view of an embodiment of a rolling element and a socket element;
- Fig. 10: an explosion illustration of an embodiment of the seat drawer, the seat frame and the movement unit;
- Fig. 11: a schematic illustration of an embodiment of a primary drawerhandle and a primary engaging element in a primary locking state; and
- Fig. 12: a schematic illustration of an embodiment of the primary drawerhandle and the primary engaging element in the primary delocking state.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

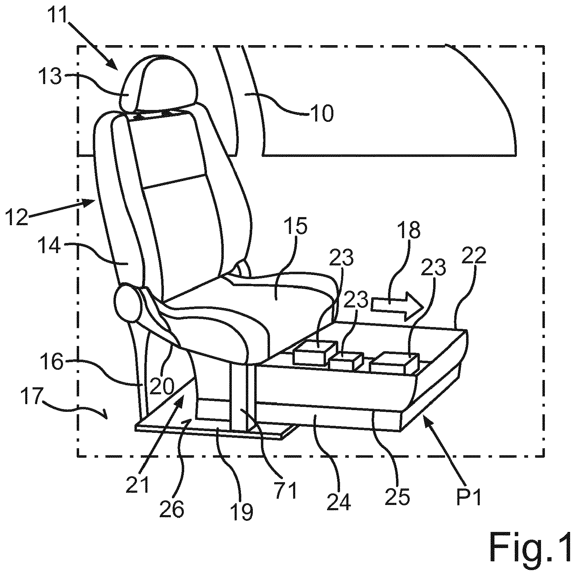

Fig. 1 shows a schematic illustration of a vehicle 10, wherein the vehicle 10 may be a personal vehicle which may be either driven manually or may be a self-driving vehicle. Furthermore, the vehicle 10 may be a semi-autonomous vehicle. In the Fig. 1, a part of an interior cabin 11 of the vehicle 10 is depicted. The vehicle 10 may comprise a vehicle seat 12, on which a user (not shown the figures) may be seated, wherein the user may be a driver of the vehicle 10 or a passenger travelling by the vehicle 10. The vehicle seat 12 may comprise a head rest 13, a back rest 14 and a seated area 15. A seat frame 16 may be designed to support the vehicle seat 12, so that the vehicle seat 12 may be integrated to a vehicle floor 17. The user may be seated on the vehicle seat 12 in a longitudinal direction, that is in the direction of the driving of the vehicle 10 or a predefined primary direction 18. However, an orientation of the vehicle seat 12 may be adjusted by means of a mechanical mechanism (not shown in the figures) which may be existing between the vehicle seat 12 and the seat frame 16.

The seat frame 16 may be arranged beneath the vehicle seat 12 and comprises at least one seat foot 71 and a base unit 19, such that a lower side 20 of the vehicle seat 12 and the base unit 19 enclose a volume or space in between which is referred to as a drawer-space 21. Furthermore, the base unit 19 may be a portion of the vehicle floor 17 corresponding to the drawer-space 21. The seat frame 16 may be designed to receive a seat drawer 22 which may be designed to be used to load or pack various commodities 23 which may be necessary for travel or required by the user.

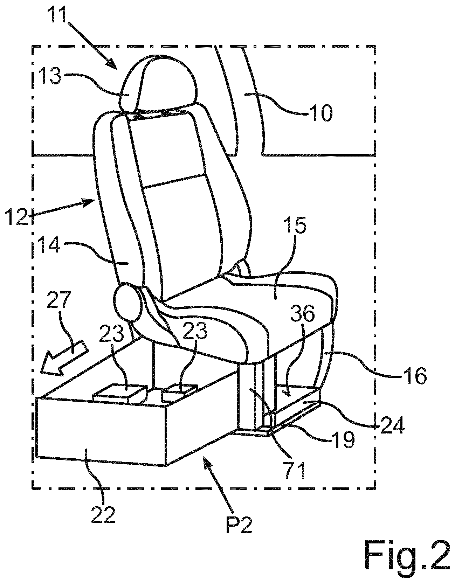

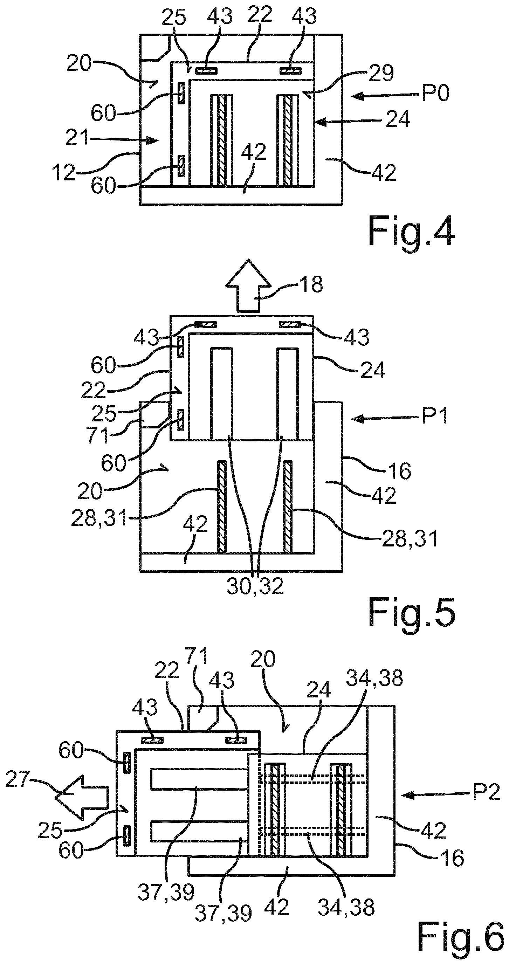

The vehicle 10 may comprise a movement unit 24 which may be located between a lower side 25 of the seat drawer 22 and an upper side 26 of the base unit 19. The movement unit 24 may be designed to enable a movement of the seat drawer 22 between a closed position P0, as shown in Fig. 4, and a primary open position P1. The movement unit 24 may be designed to enable a movement of the seat drawer 22 along a predefined secondary direction 27 between the closed position P0 and a secondary open position P2, as shown in Fig. 2. The predefined secondary direction 27 may be orthogonal to the predefined primary direction 18. For example, the predefined primary direction 18 may be along the direction of driving of the vehicle 10, whereas the predefined secondary direction 27 may be transverse or normal to the direction of driving of the vehicle 10, that is in a direction sideways which could be assessed upon opening a door (not shown in the figures) of the vehicle 10. In this case, the user may comfortably place the commodities 23 inside the seat drawer 22 while standing outside the vehicle 10 through the opened door of the vehicle 10.

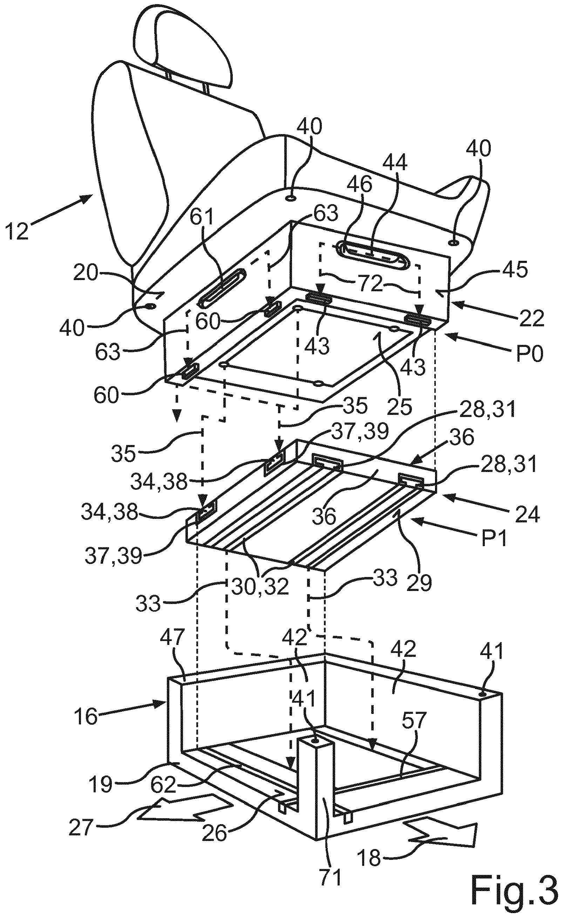

Fig. 3 depicts an explosion illustration of an embodiment of the vehicle seat 12, the seat drawer 22, the movement unit 24 and the seat frame 16. The lower side 20 of the vehicle seat 12 may be coupled to the seat frame 16, as depicted by connection points 40 on the lower side 20 and connection points 41 on the seat frame 16, respectively. The seat drawer 22 may be in the closed position P0. The upper side 26 of the base unit 19 may comprise at least one primary sliding element 28. The at least one primary sliding element 28 may be comprised by the upper side 26 of the base unit 19, which may be understood by means of depicting arrows 33. In Fig. 3, two such primary elements 28 are depicted. A bottom side 29 of the movement unit 24 may comprise at least one corresponding primary sliding element 30 aligned along the predefined primary direction 18. Furthermore, the at least one primary sliding element 28 may be implemented as a primary rail element 31 and the at least one corresponding primary sliding element 30 may be implemented as a primary groove element 32 or vice-versa. As shown in Fig. 3, two such primary sliding elements 28 and two such corresponding primary sliding elements 30 are depicted. In other words, the two primary sliding elements 28 may be implemented as the primary rail elements 31 and the two corresponding primary elements 30 may be implemented as the primary groove elements 32. Furthermore, the primary rail element 31 may be slidable in the primary groove element 32.

Furthermore, the lower side 25 of the seat drawer 22 may comprise at least one secondary sliding element 34 which may be aligned along the predefined secondary direction 27. For the sake of understandability, arrows 35 denote that the at least one secondary sliding element 34 may be comprised by the lower side 25 of the seat drawer 22. As shown in Fig. 3, two such secondary sliding elements 34 are depicted. A top side 36 of the movement unit 24 may comprise at least one corresponding secondary sliding element 37 aligned along the predefined secondary direction 27. As shown in Fig. 3, two such corresponding secondary sliding elements 37 are depicted. Furthermore, the at least one secondary sliding element 34 may be implemented as a secondary rail element 38 and the at least one corresponding secondary sliding element 37 may be implemented as a secondary groove element 39 or vice-versa. In other words, in one case, the at least one secondary sliding element 34 may be implemented as a secondary rail element 38 and the at least one corresponding secondary sliding element 37 may be implemented as a secondary groove element 39. Furthermore, the secondary rail element 38 may be slidable in the secondary groove element 39. A side unit 42 of the seat frame 16 may surround at least a part of the seat drawer 22 and/or the movement unit 24.

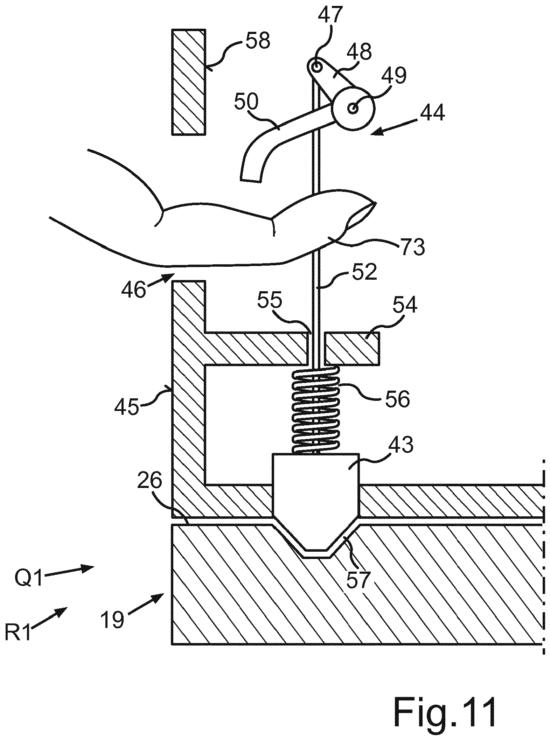

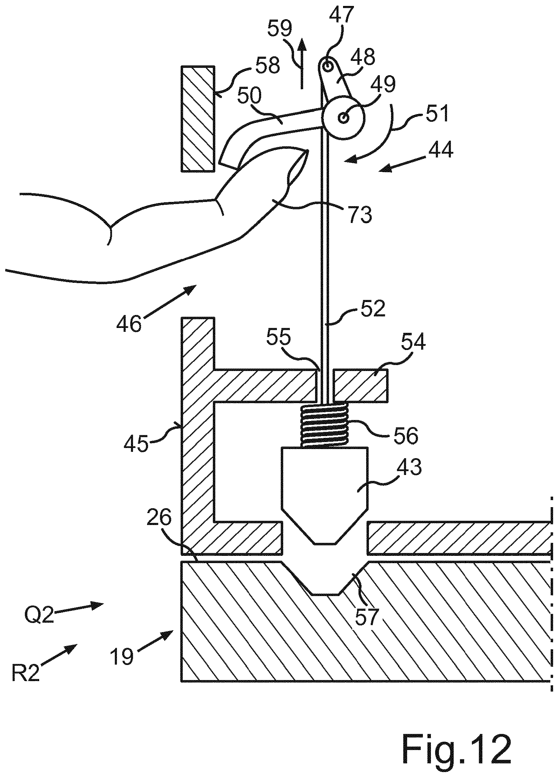

The lower side 25 of the seat drawer 22 may comprise at least one primary engaging element 43, wherein the seat drawer 22 may comprise at least one primary drawer-handle 44 which may be designed to adjust the at least one primary engaging element 43 between a primary locking state Q1, as shown in Fig. 11 and a primary de-locking state Q2, as shown in Fig. 12.

In the primary locking state Q1, the at least one primary engaging element 43 may engage the seat drawer 22 in a fixed state with respect to the predefined primary direction 18 and in the primary de-locking state Q2, the at least one primary engaging element 43 may disengage the seat drawer 22, in order that the seat drawer 22 may be movable along the predefined primary direction 18. A side 45 of the seat drawer 22 facing the predefined primary direction 18 may comprise an orifice 46. The user may insert a plurality of his fingers 73 and press a body 50 of the primary drawer-handle 44 towards an inner side 58 of the side 45 of the seat drawer 22, in which case the primary drawer-handle 44 is drawn towards the inner side 58. As a result, the body 50 may rotate about a pivot 49, which may have an offset 48 with a joint 47. A rotation of the body 50 about the pivot 49 may be depicted by an arrow 51. The primary drawer-handle 44 may further comprise a connecting rod 52, which connects the joint 47 and the primary engaging element 43. The inner side 58 may comprise a protrusion structure 54 with a hole 55, such that the connecting rod 52 may pass through the hole 55. Furthermore, the primary drawer-handle 44 may comprise a spring 56, which may be located wrapped around the connecting rod 52 between the protrusion structure 54 and the primary engaging element 43. In the primary locking state Q1, at least a part of the primary engaging element 43 may be located inside a respective primary engaging groove element 57 on the upper side 26 of the base unit 19, as a result of which the seat drawer 22 may remain in the fixed state with respect to the predefined primary direction 18.

In the primary de-locking state Q2, the user may insert the plurality of his fingers 73 through the orifice 46 and press the body 50 of the primary drawer-handle 44 towards the inner side 58 of the side 45 of the seat drawer 22, in which case the body 50 of the primary drawer-handle 44 may be drawn towards the inner side 58. As a result, the body 50 may rotate about the pivot 49. As a result the joint 47 may move upwards due the offset 48, as shown by an arrow 59, which in turn may lead to an upward movement of the connecting rod 52. As a result, the part of the primary engaging element 43, which may be located inside the respective primary engaging groove element 57, may be lifted upwards compressing the spring 56. Hence, the part of the primary engaging element 43 may be completely out of the respective primary engaging groove element 57, due to which the primary engaging groove element 57 may disengage the seat drawer 22, in order that the seat drawer 22 may be movable along the predefined primary direction 18. The user may then pull or push the seat drawer 22 into or out of the drawer-space 21 by means of the primary drawer-handle 44 along the predefined primary direction 18. The compression of the spring 56 in the primary de-locking state Q2 can push the at least a part of the primary engaging element 43 back into the respective primary engaging groove element 57 when the primary drawer-handle 44 is released. Hence, the primary engaging element 43 can return back from the primary de-locking state Q2 to the primary locking state Q1.

Similarly, the lower side 25 of the seat drawer 22 may comprise at least one secondary engaging element 60, wherein the seat drawer 22 may comprise at least one secondary drawer-handle 61 which may be designed to adjust the at least one secondary engaging element 60 between a secondary locking state R1 and a secondary de-locking state R2. In the secondary locking state R1, the at least one secondary engaging element 60 may engage the seat drawer 22 in a fixed state with respect to the predefined secondary direction 27. In the secondary de-locking state R2, the at least one secondary engaging element 60 may disengage the seat drawer 22, in order that the seat drawer 22 may be movable along the predefined secondary direction 27. For the sake of understandability, the secondary locking state R1 and the secondary de-locking state R2 are depicted in the Figs. 11 and 12 respectively, whereas the secondary engaging element 60 and the corresponding secondary drawer-handle 61 are not depicted in the Figs. 11 and 12, since the working of the secondary drawer-handle 61 and the secondary engaging element 60 is similar to that of the aforementioned working of the primary drawer-handle 44 and the primary engaging element 43. Furthermore, as shown in Fig. 3, the seat drawer 22 comprises two primary engaging elements 43 and two secondary engaging elements 60, whereas a coupling of the primary drawer-handle 44 with the respective primary engaging elements 43 is depicted by means of arrows 72, whereas a coupling of the secondary drawer-handle 61 with the respective secondary engaging elements 60 is depicted by means of arrows 63. Furthermore, the vehicle 10 may comprise an electronic locking unit (not shown in figures), wherein the electronic locking unit may be designed to lock or unlock the seat drawer 22 as a function of a user recognition signal (not shown in figures).

Figs. 4, 5 and 6 depict a bottom view of an embodiment of the seat drawer 22 in the closed position P0, in the primary open position P1 and in the secondary open position P2, respectively. For the sake of understandability, only the primary rail elements 31, that is the primary sliding elements 28, of the base unit 19 are depicted, whereas the other parts of the base unit 19, such as upper side 26 of the base unit 19, the primary engaging groove element 57 and the secondary engaging groove element 62 are omitted. In the closed position P0, the seat drawer 22 may lie in the drawer-space 21 completely, such that the primary engaging elements 43 and the secondary engaging elements 60 are in the primary locking state Q1 and the secondary locking state R1, respectively. The bottom side 29 of the movement unit 24, the lower side 25 of the seat drawer 22, the lower side 20 of the vehicle seat 12, the seat foot 71 and the side unit 42 of the seat frame 16 can be seen. Fig. 4 shows that the primary rail elements 31 of the movement unit 24 may be completely inside the primary groove elements 32.

As shown in Fig. 5, the seat drawer 22 may be moved to the primary open position P1. In this case, the primary drawer-handle 44 may be pressed such that the primary engaging elements 43 are adjusted to the primary de-locking state Q2 and at least a part of the seat drawer 22 may be pulled out of the drawer-space 21, that is the seat drawer 22 may be moved to the primary open position P1. In this case, however, due to the coupling of the movement unit 24 with the seat drawer 22 by means of the respective secondary rail elements 38 (secondary sliding element 34) and the respective secondary groove elements 39 (corresponding secondary sliding element 37), the movement unit 24 may designed to move along with the seat drawer 22 during the movement of the seat drawer 22 between the closed position P0 and the primary open position P1. Furthermore, in this case, the secondary engaging elements 60 may remain in the secondary locking state R1. However, in order to enable the movement of the seat drawer 22 along the predefined primary direction 18, the secondary engaging elements 60 may be slidable in the respective secondary engaging groove element 62 on the upper side 26 of the base unit 19, as shown in Fig. 3.

As shown in Fig. 6, the seat drawer 22 may be moved from the closed position P0 to the secondary open position P2. In this case, the secondary drawer-handle 61 may be pressed such that the secondary engaging elements 60 are adjusted to the primary de-locking state R2 and the seat drawer 22 may be pulled out of the drawer-space 21, that is the seat drawer 22 may be moved to the secondary open position P2. In this case, however, due to the coupling of the movement unit 24 with the base unit 19 by means of the respective primary rail elements 31 (primary sliding element 28) and the respective primary groove elements 32 (corresponding primary sliding element 30), the movement unit 24 may remain static in the drawer-space 21 as the seat drawer 22 may be moved between the closed position P0 and the secondary open position P2. Furthermore, in this case, the primary engaging elements 43 may remain in the primary locking state Q1. However, in order to enable the movement of the seat drawer 22 along the predefined secondary direction 27, the primary engaging elements 43 may be slidable in the respective primary engaging groove element 57 on the upper side 26 of the base unit 19. For the sake of understandability, the respective secondary rail elements 38 (secondary sliding element 34) on the are depicted by means of dashed lines on the top side 36 of the movement unit 24.

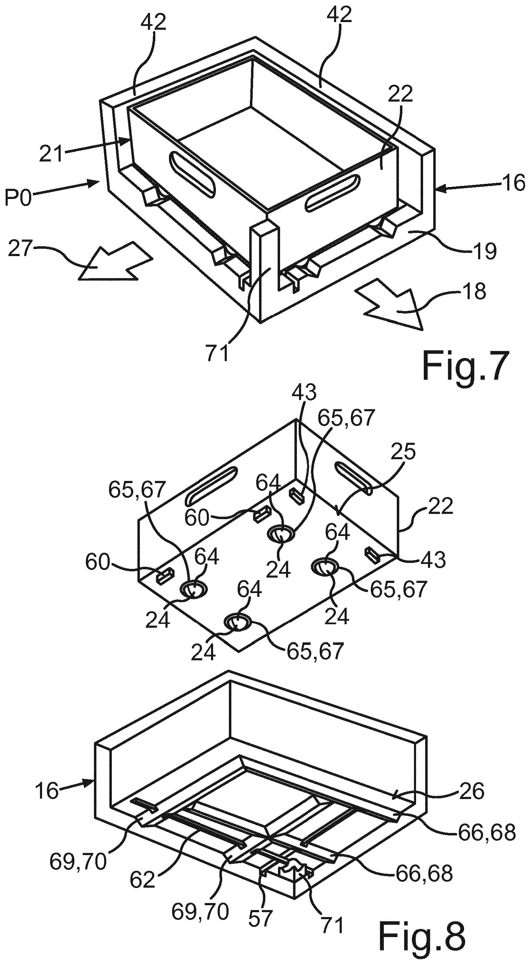

Fig. 7 depicts a schematic illustration of an embodiment of the seat drawer 22 in the closed position P0. The seat drawer 22 may be customized according to the shape and size of the drawer-space 21 which may be enclosed by the seat frame 16 and the lower side 20 of the vehicle seat 12.

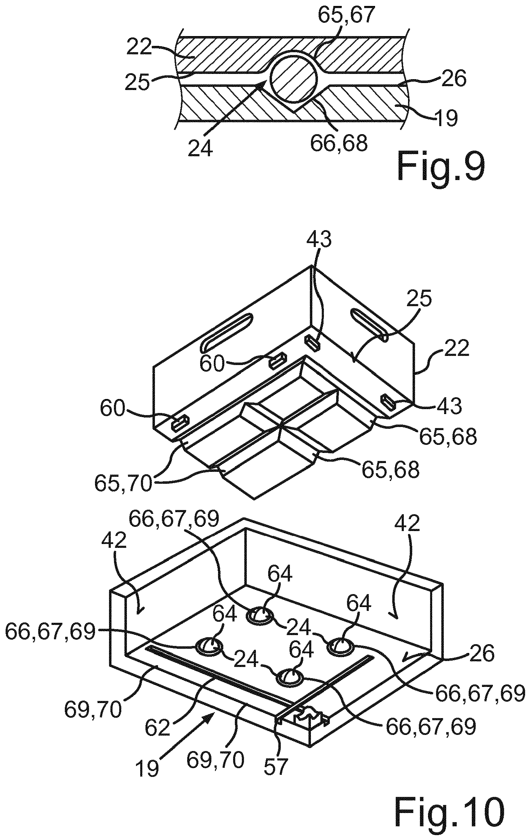

Fig. 8 depicts an explosion illustration of an embodiment of the seat drawer 22, the movement unit 24 and the seat frame 16. The movement unit 24 may comprise at least one rolling element 64. In the Fig. 8, four rolling elements 64 are depicted. The lower side 25 of the seat drawer 22 may comprise at least one first framing element 65 and the upper side 26 of the base unit 19 may comprise at least one second framing element 66. Furthermore, the at least one first framing element 65 may be implemented as a socket element 67 and the at least one second framing element 66 may be implemented as a primary groove element 68 aligned along the predefined primary direction 18 or vice-versa. In other words, in one case, as shown in Fig. 8, the at least one first framing element 65 may be implemented as the socket element 67 and the at least one second framing element 66 may be implemented as the primary groove element 68 aligned along the predefined primary direction 18. In another case, as shown in Fig. 10, the at least one first framing element 65 may be implemented as the primary groove element 68 aligned along the predefined primary direction 18 and the at least one second framing element 66 may be implemented as the socket element 67. Furthermore, the socket element 67 may be designed to receive the at least one rolling element 64, such that the at least one rolling element 64 may be rotatable along a plurality of directions while being arranged within the respective socket element 67, as shown in Fig. 9. In other words, the at least one socket element 67 may be in conformity with the respective at least one rolling element 64, such that the at least one rolling element 64 may be movably fixed inside the respective at least one socket element 67, wherein the at least one rolling element 64 is rotatable in a different direction, such as in the predefined primary direction 18 or the predefined secondary direction 27. Furthermore, the at least one rolling element 64 may be rollable in the respective primary groove element 68.

In one case, as shown in Fig. 8, the at least one first framing element 65 may be implemented as the socket element 67 and the at least one second framing element 66 may be implemented as the primary groove element 68 aligned along the predefined primary direction 18. In this case, the movement unit 24 comprising the at least one rolling element 64 may move along with the seat drawer 22 by means of the rotation within the respective socket element 67 as well as by rolling in the respective primary groove element 68 when the seat drawer 22 is pulled in or out of the drawer-space 21 along the predefined primary direction 18.

However, in another case, as shown in Fig. 10, the at least one first framing element 65 may be implemented as the primary groove element 68 aligned along the predefined primary direction 18 and the at least one second framing element 66 may be implemented as the socket element 67. In this case, the movement unit 24 comprising the at least one rolling element 64 may remain static and enable the movement of the seat drawer 22 by means of the rotation within the respective socket element 67 on the upper side 26 of the base unit 19. In this case, the lower side 25 of the seat drawer 22 comprising the primary groove element 68 may move over the rotating at least one rolling element 64 when the seat drawer 22 is pulled in or out of the drawer-space 21 along the predefined primary direction 18.

Furthermore, the lower side 25 of the seat drawer 22 may comprise at least one first framing element 65 and the upper side 26 of the base unit 19 may comprise at least one third framing element 69, whereas the movement unit 24 may comprise at least one rolling element 64. Furthermore, the at least one first framing element 65 may be implemented as the socket element 67 and the at least one third framing element 69 may be implemented as a secondary groove element 70 aligned along the predefined secondary direction 27 or vice-versa. In other words, in one case, as shown in Fig. 8, the at least one first framing element 65 may be implemented as the socket element 67 and the at least one third framing element 69 may be implemented as the secondary groove element 70 aligned along the predefined secondary direction 27. In another case, as shown in Fig. 10, the at least one first framing element 65 may be implemented as the secondary groove element 70 aligned along the predefined secondary direction 27 and the at least one third framing element 69 may be implemented as the socket element 67. Furthermore, the socket element 67 may be designed to receive the at least one rolling element 64, such that the at least one rolling element 64 may be rotatable along a plurality of directions while being arranged within the respective socket element 67. In other words, the at least one socket element 67 may be in conformity with the respective at least one rolling element 64, such that the at least one rolling element 64 may be movably arranged inside the respective at least one socket element 67, wherein the at least one rolling element 64 is rotatable in different directions, such as in directions between the predefined primary direction 18 and the predefined secondary direction 27. Furthermore, the at least one rolling element 64 may be rollable in the respective secondary groove element 70.

In one case, as shown in Fig. 8, the at least one first framing element 65 may be implemented as the socket element 67 and the at least one third framing element 69 may be implemented as the secondary groove element 70 aligned along the predefined secondary direction 27. In this case, the movement unit 24 comprising the at least one rolling element 64 may move along with the seat drawer 22 by means of the rotation within the respective socket element 67 as well as by rolling in the respective secondary groove element 70 when the seat drawer 22 is pulled in or out of the drawer-space 21 along the predefined secondary direction 27.

However, in another case, as shown in Fig. 10, the at least one first framing element 65 may be implemented as the secondary groove element 70 aligned along the predefined secondary direction 27 and the at least one third framing element 69 may be implemented as the socket element 67. In this case, the movement unit 24 comprising the at least one rolling element 64 may remain static and enable the movement of the seat drawer 22 by means of the rotation within the respective socket element 67 on the upper side 26 of the base unit 19. In this case, the lower side 25 of the seat drawer 22 comprising the secondary groove element 70 may move over the rotating at least one rolling element 64 when the seat drawer 22 is pulled in or out of the drawer-space 21 along the predefined secondary direction 27.

Overall, the example shows how the seat drawer can be push in and out of in the drawer-space 21 of the vehicle 10 efficiently, as it is provided by the invention.

## Claims

1. Vehicle (10) comprising a vehicle seat (12), a seat drawer (22), a seat frame (16) and a movement unit (24), wherein
- the seat frame (16) is arranged beneath the vehicle seat (12) and comprises a base unit (19) and is designed to receive the seat drawer (22); and
- the movement unit (24) is located between a lower side (25) of the seat drawer (22) and an upper side (26) of the base unit (19), wherein the movement unit (24) is designed to enable a movement of the seat drawer (22) along a predefined primary direction (18) between a closed position (P0) and a primary open position (P1),
**characterized in that**
the movement unit (24) is designed to enable a movement of the seat drawer (22) along a predefined secondary direction (27) between the closed position (P0) and a secondary open position (P2), wherein the predefined secondary direction (27) is orthogonal to the predefined primary direction (18).

2. Vehicle (10) according to claim 1, wherein
- the upper side (26) of the base unit (19) comprises at least one primary sliding element (28) aligned along the predefined primary direction (18);
- a bottom side (29) of the movement unit (24) comprises at least one corresponding primary sliding element (30) aligned along the predefined primary direction (18);
- the at least one primary sliding element (28) is implemented as a primary rail element (31) and the at least one corresponding primary sliding element (30) is implemented as a primary groove element (32) or vice-versa; and
- the primary rail element (31) is slidable in the primary groove element (32).

3. Vehicle (10) according to any of the preceding claims, wherein
- the lower side (25) of the seat drawer (22) comprises at least one secondary sliding element (34) aligned along the predefined secondary direction (27);
- a top side (36) of the movement unit (24) comprises at least one corresponding secondary sliding element (37) aligned along the predefined secondary direction (27);
- the at least one secondary sliding element (34) is implemented as a secondary rail element (38) and the at least one corresponding secondary sliding element (37) is implemented as a secondary groove element (39) or vice-versa; and
- the secondary rail element (38) is slidable in the secondary groove element (39).

4. Vehicle (10) according to any of the preceding claims, wherein the movement unit (24) is designed to move along with the seat drawer (22) during the movement of the seat drawer (22) between the closed position (P0) and the primary open position (P1).

5. Vehicle (10) according to claim 1, wherein
- the movement unit (24) comprises at least one rolling element (64);
- the lower side (25) of the seat drawer (22) comprises at least one first framing element (65);
- the upper side (26) of the base unit (19) comprises at least one second framing element (66);
- the at least one first framing element (65) is implemented as a socket element (67) and the at least one second framing element (66) is implemented as a primary groove element (68) aligned along the predefined primary direction (18) or vice-versa;
- the socket element (67) is designed to receive the at least one rolling element (64), such that the at least one rolling element (64) is rotatable along a plurality of directions while being arranged within the respective socket element (67); and
- the at least one rolling element (64) is rollable in the respective primary groove element (68).

6. Vehicle (10) according to claim 5, wherein
- the lower side (25) of the seat drawer (22) comprises at least one first framing element (65);
- the upper side (26) of the base unit (19) comprises at least one third framing element (69);
- the at least one first framing element (65) is implemented as the socket element (67) and the at least one third framing element (69) is implemented as a secondary groove element (70) aligned along the predefined secondary direction (27) or vice-versa;
- the at least one rolling element (64) is rollable in the respective secondary groove element (70).

7. Vehicle (10) according to any of the preceding claims, wherein a side unit (42) of the seat frame (16) surrounds at least a part of the seat drawer (22) and/or the movement unit (19).

8. Vehicle (10) according to any of the preceding claims, wherein the lower side (25) of the seat drawer (22) comprises at least one primary engaging element (43), wherein the seat drawer (22) comprises at least one primary drawer-handle (44) which is designed to adjust the at least one primary engaging element (43) between a primary locking state (Q1) and a primary de-locking state (Q2), wherein in the primary locking state (Q1), the at least one primary engaging element (43) engages the seat drawer (22) in a fixed state with respect to the predefined primary direction (18) and in the primary de-locking state (Q2), the at least one primary engaging element (43) disengages the seat drawer (22), in order that the seat drawer (22) is movable along the predefined primary direction (18).

9. Vehicle (10) according to claim 8, wherein the at least one primary engaging element (43) is slidable in a respective at least one primary engaging groove element (57) on the upper side (26) of the base unit (19).

10. Vehicle (10) according to any of the preceding claims, wherein the lower side (25) of the seat drawer (22) comprises at least one secondary engaging element (60), wherein the seat drawer (22) comprises at least one secondary drawer-handle (61) which is designed to adjust the at least one secondary engaging element (60) between a secondary locking state (R1) and a secondary de-locking state (R2), wherein in the secondary locking state (R1), the at least one secondary engaging element (60) engages the seat drawer (22) in a fixed state with respect to the predefined secondary direction (27) and in the secondary de-locking state (R2), the at least one secondary engaging element (60) disengages the seat drawer (22), in order that the seat drawer (22) is movable along the predefined secondary direction (27).

11. Vehicle (10) according to claim 10, wherein the at least one secondary engaging element (60) is slidable in a respective at least one secondary engaging groove element (62) on the upper side (26) of the base unit (19).

12. Vehicle (10) according to any of the preceding claims, wherein the seat drawer (22) is customized according to the shape and size of a drawer-space (21) which is enclosed by the seat frame (16) and the lower side (20) of the vehicle seat (12).

13. Vehicle (10) according to any of the preceding claims, wherein the vehicle (10) comprises an electronic locking unit, wherein the electronic locking unit is designed to lock or unlock the seat drawer (22) as function of a user recognition signal.

## Patentansprüche

1. Fahrzeug (10) mit einem Fahrzeugsitz (12), einer Sitzschublade (22), einem Sitzrahmen (16) und einer Bewegungseinheit (24), wobei
- der Sitzrahmen (16) unterhalb des Fahrzeugsitzes (12) angeordnet ist und eine Basiseinheit (19) umfasst und dazu ausgelegt ist, die Sitzschublade (22) aufzunehmen; und
- die Bewegungseinheit (24) zwischen einer Unterseite (25) der Sitzschublade (22) und einer Oberseite (26) der Basiseinheit (19) angeordnet ist, wobei die Bewegungseinheit (24) dazu ausgelegt ist, eine Bewegung der Sitzschublade (22) entlang einer vordefinierten primären Richtung (18) zwischen einer geschlossenen Position (P0) und einer primären offenen Position (P1) zu ermöglichen,
**dadurch gekennzeichnet, dass**
die Bewegungseinheit (24) dazu ausgelegt ist, eine Bewegung der Sitzschublade (22) entlang einer vordefinierten sekundären Richtung (27) zwischen der geschlossenen Position (P0) und einer sekundären offenen Position (P2) zu ermöglichen, wobei die vordefinierte sekundäre Richtung (27) zur vordefinierten primären Richtung (18) orthogonal ist.

2. Fahrzeug (10) nach Anspruch 1, wobei
- die Oberseite (26) der Basiseinheit (19) mindestens ein primäres Gleitelement (28) umfasst, das entlang der vordefinierten primären Richtung (18) ausgerichtet ist;
- eine Unterseite (29) der Bewegungseinheit (24) mindestens ein entsprechendes primäres Gleitelement (30) umfasst, das entlang der vordefinierten primären Richtung (18) ausgerichtet ist;
- das mindestens eine primäre Gleitelement (28) als primäres Schienenelement (31) implementiert ist und das mindestens eine entsprechende primäre Gleitelement (30) als primäres Nutelement (32) implementiert ist oder umgekehrt; und
- das primäre Schienenelement (31) in dem primären Nutelement (32) verschiebbar ist.

3. Fahrzeug (10) nach einem der vorangehenden Ansprüche, wobei
- die Unterseite (25) der Sitzschublade (22) mindestens ein sekundäres Gleitelement (34) umfasst, das entlang der vordefinierten sekundären Richtung (27) ausgerichtet ist;
- eine Oberseite (36) der Bewegungseinheit (24) mindestens ein entsprechendes sekundäres Gleitelement (37) umfasst, das entlang der vordefinierten sekundären Richtung (27) ausgerichtet ist;
- das mindestens eine sekundäre Gleitelement (34) als sekundäres Schienenelement (38) implementiert ist und das mindestens eine entsprechende sekundäre Gleitelement (37) als sekundäres Nutelement (39) implementiert ist oder umgekehrt; und
- das sekundäre Schienenelement (38) in dem sekundären Nutelement (39) verschiebbar ist.

4. Fahrzeug (10) nach einem der vorangehenden Ansprüche, wobei die Bewegungseinheit (24) dazu ausgelegt ist, sich während der Bewegung der Sitzschublade (22) zwischen der geschlossenen Position (P0) und der primären offenen Position (P1) zusammen mit der Sitzschublade (22) zu bewegen.

5. Fahrzeug (10) nach Anspruch 1, wobei
- die Bewegungseinheit (24) mindestens ein Rollelement (64) umfasst;
- die Unterseite (25) der Sitzschublade (22) mindestens ein erstes Umrahmungselement (65) umfasst;
- die Oberseite (26) der Basiseinheit (19) mindestens ein zweites Umrahmungselement (66) umfasst;
- das mindestens eine erste Umrahmungselement (65) als Buchsenelement (67) implementiert ist und das mindestens eine zweite Umrahmungselement (66) als primäres Nutelement (68) implementiert ist, das entlang der vordefinierten primären Richtung (18) ausgerichtet ist, oder umgekehrt;
- das Buchsenelement (67) dazu ausgelegt ist, das mindestens eine Rollelement (64) aufzunehmen, so dass das mindestens eine Rollelement (64) entlang einer Vielzahl von Richtungen drehbar ist, während es innerhalb des jeweiligen Buchsenelements (67) angeordnet ist; und
- das mindestens eine Rollelement (64) in dem jeweiligen primären Nutelement (68) rollbar ist.

6. Fahrzeug (10) nach Anspruch 5, wobei
- die Unterseite (25) der Sitzschublade (22) mindestens ein erstes Umrahmungselement (65) umfasst;
- die Oberseite (26) der Basiseinheit (19) mindestens ein drittes Umrahmungselement (69) umfasst;
- das mindestens eine erste Umrahmungselement (65) als Buchsenelement (67) implementiert ist und das mindestens eine dritte Umrahmungselement (69) als sekundäres Nutelement (70) implementiert ist, das entlang der vordefinierten sekundären Richtung (27) ausgerichtet ist, oder umgekehrt;
- das mindestens eine Rollelement (64) in dem jeweiligen sekundären Nutelement (70) rollbar ist.

7. Fahrzeug (10) nach einem der vorangehenden Ansprüche, wobei eine Seiteneinheit (42) des Sitzrahmens (16) zumindest einen Teil der Sitzschublade (22) und/oder der Bewegungseinheit (19) umgibt.

8. Fahrzeug (10) nach einem der vorangehenden Ansprüche, wobei die Unterseite (25) der Sitzschublade (22) mindestens ein primäres Eingriffselement (43) umfasst, wobei die Sitzschublade (22) mindestens einen primären Schubladengriff (44) umfasst, der dazu ausgelegt ist, das mindestens eine primäre Eingriffselement (43) zwischen einem primären Verriegelungszustand (Q1) und einem primären Entriegelungszustand (Q2) einzustellen, wobei im primären Verriegelungszustand (Q1) das mindestens eine primäre Eingriffselement (43) die Sitzschublade (22) in einem festen Zustand mit Bezug auf die vordefinierte primäre Richtung (18) in Eingriff bringt und im primären Entriegelungszustand (Q2) das mindestens eine primäre Eingriffselement (43) die Sitzschublade (22) löst, damit die Sitzschublade (22) entlang der vordefinierten primären Richtung (18) beweglich ist.

9. Fahrzeug (10) nach Anspruch 8, wobei das mindestens eine primäre Eingriffselement (43) in einem jeweiligen mindestens einen primären Eingriffsnutelement (57) auf der Oberseite (26) der Basiseinheit (19) verschiebbar ist.

10. Fahrzeug (10) nach einem der vorangehenden Ansprüche, wobei die Unterseite (25) der Sitzschublade (22) mindestens ein sekundäres Eingriffselement (60) umfasst, wobei die Sitzschublade (22) mindestens einen sekundären Schubladengriff (61) umfasst, der dazu ausgelegt ist, das mindestens eine sekundäre Eingriffselement (60) zwischen einem sekundären Verriegelungszustand (R1) und einem sekundären Entriegelungszustand (R2) einzustellen, wobei im sekundären Verriegelungszustand (R1) das mindestens eine sekundäre Eingriffselement (60) die Sitzschublade (22) in einem festen Zustand mit Bezug auf die vordefinierte sekundäre Richtung (27) in Eingriff bringt und im sekundären Entriegelungszustand (R2) das mindestens eine sekundäre Eingriffselement (60) die Sitzschublade (22) löst, damit die Sitzschublade (22) entlang der vordefinierten sekundären Richtung (27) beweglich ist.

11. Fahrzeug (10) nach Anspruch 10, wobei das mindestens eine sekundäre Eingriffselement (60) in einem jeweiligen mindestens einen sekundären Eingriffsnutelement (62) auf der Oberseite (26) der Basiseinheit (19) verschiebbar ist.

12. Fahrzeug (10) nach einem der vorangehenden Ansprüche, wobei die Sitzschublade (22) gemäß der Form und Größe eines Schubladenraums (21) maßgeschneidert ist, der durch den Sitzrahmen (16) und die Unterseite (20) des Fahrzeugsitzes (12) eingeschlossen ist.

13. Fahrzeug (10) nach einem der vorangehenden Ansprüche, wobei das Fahrzeug (10) eine elektronische Verriegelungseinheit umfasst, wobei die elektronische Verriegelungseinheit dazu ausgelegt ist, die Sitzschublade (22) als Funktion eines Benutzererkennungssignals zu verriegeln oder zu entriegeln.

## Revendications

1. Véhicule (10) comportant un siège de véhicule (12), un tiroir de siège (22), un cadre de siège (16) et une unité de mouvement (24), dans lequel
- le cadre de siège (16) est agencé sous le siège de véhicule (12) et comporte une unité de base (19) et est conçu pour recevoir le tiroir de siège (22) ; et
- l'unité de mouvement (24) est située entre un côté inférieur (25) du tiroir de siège (22) et un côté supérieur (26) de l'unité de base (19), dans lequel l'unité de mouvement (24) est conçue pour permettre un mouvement du tiroir de siège (22) le long d'une direction primaire prédéfinie (18) entre une position fermée (P0) et une position primaire ouverte (P1),
**caractérisé en ce que**
l'unité de mouvement (24) est conçue pour permettre un mouvement du tiroir de siège (22) le long d'une direction secondaire prédéfinie (27) entre une position fermée (P0) et une position secondaire ouverte (P2), dans lequel la direction secondaire prédéfinie (27) est orthogonale à la direction primaire prédéfinie (18).

2. Véhicule (10) selon la revendication 1, dans lequel
- le côté supérieur (26) de l'unité de base (19) comporte au moins un élément coulissant primaire (28) aligné le long de la direction primaire prédéfinie (18) ;
- un côté de fond (29) de l'unité de mouvement (24) comporte au moins un élément coulissant primaire correspondant (30) aligné le long de la direction primaire prédéfinie (18) ;
- l'au moins un élément coulissant primaire (28) est mis en oeuvre en tant qu'élément de rail primaire (31) et l'au moins un élément coulissant primaire correspondant (30) est mis en oeuvre en tant qu'élément de rainure primaire (32) ou vice-versa ; et
- l'élément de rail primaire (31) est coulissant dans l'élément de rainure primaire (32).

3. Véhicule (10) selon l'une quelconque des revendications précédentes, dans lequel
- le côté inférieur (25) du tiroir de siège (22) comporte au moins un élément coulissant secondaire (34) aligné le long de la direction secondaire prédéfinie (27) ;
- un haut (36) de l'unité de mouvement (24) comporte au moins un élément coulissant secondaire correspondant (37) aligné le long de la direction secondaire prédéfinie (27) ;
- l'au moins un élément coulissant secondaire (34) est mis en oeuvre en tant qu'élément de rail secondaire (38) et l'au moins un élément coulissant secondaire correspondant (37) est mis en oeuvre en tant qu'élément de rainure secondaire (39) ou vice-versa ; et
- l'élément de rail secondaire (38) est coulissant dans l'élément de rainure secondaire (39).

4. Véhicule (10) selon l'une quelconque des revendications précédentes, dans lequel l'unité de mouvement (24) est conçue pour se déplacer avec le tiroir de siège (22) pendant le mouvement du tiroir de siège (22) entre la position fermée (P0) et la position primaire ouverte (P1).

5. Véhicule (10) selon la revendication 1, dans lequel
- l'unité de mouvement (24) comporte au moins un élément de roulement (64) ;
- le côté inférieur (25) du tiroir de siège (22) comporte au moins un premier élément d'encadrement (65) ;
- le côté supérieur (26) de l'unité de base (19) comporte au moins un second élément d'encadrement (66) ;
- l'au moins un premier élément d'encadrement (65) est mis en œuvre en tant qu'élément de douille (67) et l'au moins un second élément d'encadrement (66) est mis en œuvre en tant qu'élément de rainure primaire (68) aligné le long de la direction primaire prédéfinie (18) ou vice-versa ;
- l'élément de douille (67) est conçu pour recevoir l'au moins un élément de roulement (64), en sorte que l'au moins un élément de roulement (64) est rotatif le long d'une pluralité de directions tout en étant agencé dans l'élément de douille respectif (67) ; et
- l'au moins un élément de roulement (64) peut rouler dans l'élément de rainure primaire respectif (68).

6. Véhicule (10) selon la revendication 5, dans lequel
- le côté inférieur (25) du tiroir de siège (22) comporte au moins un premier élément d'encadrement (65) ;
- le côté supérieur (26) de l'unité de base (19) comporte au moins un troisième élément d'encadrement (69) ;
- l'au moins un premier élément d'encadrement (65) est mis en œuvre en tant qu'élément de douille (67) et l'au moins un troisième élément d'encadrement (69) est mis en œuvre en tant qu'élément de rainure secondaire (70) aligné le long de la direction secondaire prédéfinie (27) ou vice-versa ;
- l'au moins un élément de roulement (64) peut rouler dans l'élément de rainure secondaire respectif (70).

7. Véhicule (10) selon l'une quelconque des revendications précédentes, dans lequel une unité latérale (42) du cadre de siège (16) entoure au moins une partie du tiroir de siège (22) et / ou l'unité de mouvement (19).

8. Véhicule (10) selon l'une quelconque des revendications précédentes, dans lequel le côté inférieur (25) du tiroir de siège (22) comporte au moins un élément d'engagement primaire (43), dans lequel le tiroir de siège (22) comporte au moins une poignée de tiroir primaire (44), qui est conçue pour ajuster l'au moins un élément d'engagement primaire (43) entre un état de verrouillage primaire (Q1) et un état de déverrouillage primaire (Q2), dans lequel, dans l'état de verrouillage primaire (Q1), l'au moins un élément d'engagement primaire (43) engage le tiroir de siège (22) dans un état fixe par rapport à la direction primaire prédéfinie (18), et dans l'état de déverrouillage primaire (Q2), l'au moins un élément d'engagement primaire (43) désengage le tiroir de siège (22), afin que le tiroir de siège (22) soit mobile le long de la direction primaire prédéfinie (18).

9. Véhicule (10) selon la revendication 8, dans lequel l'au moins un élément d'engagement primaire (43) est coulissant dans au moins un élément de rainure d'engagement primaire respectif (57) sur le côté supérieur (26) de l'unité de base (19).

10. Véhicule (10) selon l'une quelconque des revendications précédentes, dans lequel le côté inférieur (25) du tiroir de siège (22) comporte au moins un élément d'engagement secondaire (60), dans lequel le tiroir de siège (22) comporte au moins une poignée de tiroir secondaire (61), qui est conçue pour ajuster l'au moins un élément d'engagement secondaire (60) entre un état de verrouillage secondaire (R1) et un état de déverrouillage secondaire (R2), dans lequel, dans l'état de verrouillage secondaire (R1), l'au moins un élément d'engagement secondaire (60) engage le tiroir de siège (22) dans un état fixe par rapport à la direction secondaire prédéfinie (27), et dans l'état de déverrouillage secondaire (R2), l'au moins un élément d'engagement secondaire (60) désengage le tiroir de siège (22), afin que le tiroir de siège (22) soit mobile le long de la direction secondaire prédéfinie (27).

11. Véhicule (10) selon la revendication 10, dans lequel l'au moins un élément d'engagement secondaire (60) est coulissant dans au moins un élément de rainure d'engagement secondaire respectif (62) sur le côté supérieur (26) de l'unité de base (19).

12. Véhicule (10) selon l'une quelconque des revendications précédentes, dans lequel le tiroir de siège (22) est personnalisé selon la forme et la taille d'un espace de tiroir (21), qui est enfermé par le cadre de siège (16) et le côté inférieur (20) du siège de véhicule (12).

13. Véhicule (10) selon l'une quelconque des revendications précédentes, dans lequel le véhicule (10) comporte une unité de verrouillage électronique, dans lequel l'unité de verrouillage électronique est conçue pour verrouiller ou déverrouiller le tiroir de siège (22) en fonction d'un signal de reconnaissance de l'utilisateur.
